## Europäisches Patentamt

## European Patent Office

## Office européen des brevets

(11) Veröffentlichungsnummer: **0 548 516 B1**

# (12) EUROPÄISCHE PATENTSCHRIFT

(45) Veröffentlichungstag der Patentschrift: **07.06.95**

(51) Int. Cl.⁶: **B23H 7/20**

(21) Anmeldenummer: **92119013.8**

(22) Anmeldetag: **06.11.92**

(54) **Verfahren zur Steuerung einer Funkenerosionsmaschine.**

(30) Priorität: **23.12.91 CH 833/91**

(43) Veröffentlichungstag der Anmeldung:
**30.06.93 Patentblatt 93/26**

(45) Bekanntmachung des Hinweises auf die Patenterteilung:
**07.06.95 Patentblatt 95/23**

(84) Benannte Vertragsstaaten:
**CH DE FR GB IT LI**

(56) Entgegenhaltungen:
**EP-A- 0 426 870**
**EP-A- 0 469 471**

**PATENT ABSTRACTS OF JAPAN vol. 010, no. 311 (M-528)23. Oktober 1986 & JP-A-61 121 828 (INOUE JAPX RES INC) 9 Juni 1986**

**CT MAGAZIN FÜR COMPUTER TECHNIK 1. März 1991, Seiten 188 - 206 C. VON AL-TROCK']über den Daumen gepeilt: Fuzzy Logic scharfe Theorie der unscharfen Mengen'**

(73) Patentinhaber: **AG für industrielle Elektronik AGIE Losone bei Locarno**

**CH-6616 Losone/Locarno (CH)**

(72) Erfinder: **Boccadoro, Marco Broghirolo**
**CH-6653 Verscio (CH)**

(74) Vertreter: **EGLI-EUROPEAN PATENT ATTORNEYS**
**Horneggstrasse 4**
**Postfach 473**
**CH-8034 Zürich (CH)**

**Beschreibung**

Die Erfindung betrifft ein Verfahren zur Steuerung eines Funkenerosionsprozesses in einer Funkenerosionsmaschine mit einer Funkenerosionselektrode und einem Werkstück, wobei mindestens zwei Parameter, von denen bekannt ist, dass sie im wesentlichen einem selben momentan herrschenden Zustand des Funkenerosionsprozesses entsprechen und dass ihre Variation einen momentan herrschenden Zustand des Funkenerosionsprozesses beeinflusst, einzeln oder als Kombination davon einer Logikeinrichtung zugeführt werden, um mindestens ein Ausgangssignal dieser Logikeinrichtung zu erzeugen, das einer Steuerung für mindestens einen der genannten Parameter zugeführt wird, wobei die der Logikeinrichtung zugeführten Parameter darin anhand von darin gespeicherten Regeln nach den Gesetzen der unscharfen Logik verarbeitet werden und die Steuerung den zu ändernden Parameter so ändert, dass der momentan herrschende Zustand des Funkenerosionsprozesses einem momentan gewünschten Zustand des Funkenerosionsprozesses angeglichen oder zumindest angenähert wird.

Ebenfalls betrifft die Erfindung eine Anwendung dieses Verfahrens beim Betrieb einer Vorrichtung mit einer Funkenerosionselektrode, einem Werkstück, einer Logikeinrichtung mit mindestens zwei Eingängen für einzugebende Parameter und mindestens einem Ausgang für ein Ausgangssignal, das einer Steuerung für mindestens einen Parameter zugeführt wird, wobei die Logikeinrichtung zum Speichern eines Satzes von Regeln zur Verarbeitung der ihr zugeführten Parameter nach den Gesetzen der unscharfen Logik ausgebildet ist.

Ein Verfahren und eine Vorrichtung dieser Art sind aus EP-0426870 bekannt. Die Logikeinrichtung der betreffenden Vorrichtung erhält zwei Eingangswerte ($Si$ und $\delta Si$), von denen jeder ein Parameter des momentan herrschenden Zustands des Funkenerosionsprozesses ist bzw. diesem entspricht, und sie liefert zwei Ausgangswerte ($\delta T$ und $\delta D$). Die in der Logikeinrichtung gespeicherten Regeln bestimmen, wie diese beiden Ausgangswerte ($\delta T$ und $\delta D$) zu ändern sind, wenn sich die Eingangswerte ($Si$ und $\delta Si$) einzeln oder beide ändern, und die beiden Ausgangswerte ($\delta T$ und $\delta D$) werden dann in einer Steuerung zu Eingabeparametern ($T$ und $D$) des Funkenerosionsprozesses verarbeitet.

Bei diesem Verfahren und der entsprechenden Vorrichtung können die Eingangswerte nicht in Abhängigkeit voneinander bzw. der eine dieser Eingangswerte nicht in Abhängigkeit vom anderen geändert werden.

Ein Verfahren und eine Vorrichtung der eingangs genannten Art sind auch Gegenstand der europäischen Patentanmeldung Nr. 91112510.2, die zwar vor dem Prioritätsdatum der vorliegenden Patentanmeldung eingereicht, jedoch als Publikation EP-0469471 erst nach dem Prioritätsdatum der vorliegenden Patentanmeldung veröffentlicht wurde. In der Logikeinrichtung der Vorrichtung nach EP-0469471 werden drei Eingangswerte (A, B und C) verarbeitet, die als zeitlich aufeinanderfolgende Werte bzw. zeitlich unterschiedliche Mittelwerte immer desselben Parameters des Funkenerosionsprozesses (Elektroden-Position) definiert sind, es werden also Werte eines einzelnen Parameters verglichen, die zu verschiedenen Zeiten herrschen. Einer dieser Werte des Parameters kann in der Gegenwart liegen, aber die anderen Werte liegen zwangsweise in der Vergangenheit und können nicht "rückwirkend" geändert werden. Dementsprechend weist die Vorrichtung von EP-0469471 einen Wertespeicher auf, und sie kann nicht bezüglich aller Parameter des Funkenerosionsprozesses in Echtzeit arbeiten. Aus diesem Grund können die in der Logikeinrichtung gespeicherten Regeln nicht bestimmen, wie einer der zugeführten Parameter zu ändern ist, wenn sich ein anderer der zugeführten Parameter ändert.

Nachteilig ist also auch bei diesem Verfahren und der entsprechenden Vorrichtung, dass die Eingangswerte nicht in Abhängigkeit voneinander bzw. der eine dieser Eingangswerte nicht in Abhängigkeit vom anderen geändert werden können.

Ein Verfahren und eine Vorrichtung zur Steuerung eines Funkenerosionsprozesses in einer Funkenerosionsmaschine mit einer Funkenerosionselektrode und einem Werkstück, und insbesondere ein Verfahren und eine Vorrichtung zur Steuerung der Lage der Funkenerosionselektrode in bezug auf das Werkstück in einer Funkenerosionsmaschine, sind aus EP-A-0333170 oder US-A-4864091 bekannt. Der Ist-Abstand zwischen der Funkenerosionselektrode und dem Werkstück wird mit einem Soll-Abstand verglichen, welcher den momentan gewünschten Prozessbedingungen für die Bearbeitung des Werkstücks entspricht. Aus dem Vergleich wird ein Fehlersignal gebildet, das über eine Tiefpassfilterschaltung zu einer Steuerschaltung für die Bewegung der Funkenerosionselektrode geführt wird.

Ein Verfahren und eine Vorrichtung zur Steuerung eines Funkenerosionsprozesses in einer Funkenerosionsmaschine mit einer Funkenerosionselektrode und einem Werkstück, und insbesondere ein Verfahren und eine Vorrichtung zur Steuerung der Lage der Funkenerosionselektrode in bezug auf das Werkstück in einer Funkenerosionsmaschine, sind auch aus EP-A-272640 oder US-A-4822970 bekannt. Der Ist-Abstand zwischen der Funkenerosionselektrode und dem Werkstück wird durch Hub- und Senkbewegungen regelmässig geändert und diese Hub- und Senkbewegungen werden in Abhängigkeit von den momentan herrschenden und früher vorgefundenen Prozessbedingungen für die Bearbeitung des Werkstücks gesteuert.

Nachteilig ist bei diesen Verfahren bzw. Vorrichtungen, dass der Einfluss anderer Parameter der Bearbeitung des Werkstücks nicht in die Steuerung der Bewegung der Funkenerosionselektrode einbezogen wird.

Das erwähnte Verfahren und die erwähnte Vorrichtung nach EP-A-0333170 oder US-A-4864091 erlauben zwar, das Regelverhalten des Servosystems für die Steuerung des Ist-Abstands zwischen der Funkenerosionselektrode und dem Werkstück für die meisten Prozessbedingungen zu optimieren, indem die Grenzfrequenz der Tiefpassfilterschaltung diesen Prozessbedingungen angepasst und der Wechselspannungsanteil des Fehlersignals minimal gehalten wird. Das Fehlersignal wird dann einem PID-Regler eingegeben, um das gewünschte dynamische Verhalten des Servosystems zu erreichen. Das Ausgangssignal des PID-Reglers wird einem Antrieb der Funkenerosionselektrode zugeleitet, um diese zu bewegen. Da man aber den Funkenerosionsprozess nicht im Sinne der Regelungstechnik zu modellieren weiss, muss man beim Entwerfen des PID-Reglers im Experimentierverfahren vorgehen ("trial and error"), was sehr aufwendig ist und nicht mit Sicherheit zu einem optimalen Resultat führt.

Für sehr schwierige Funkenerosionsprozesse, beispielsweise bei sehr grossen Maschinen oder im Gegenteil beim Prozess der Mikroerosion, genügt das erwähnte Experimentieren nicht. In solchen Fällen entsteht nämlich ein Problem der Instabilität, welches dadurch verursacht wird, dass die zeitkonstante der Maschine ungewöhnlich gross oder klein sind. Dann wirkt sich der Einfluss vieler Parameter so stark auf die Stabilität des Funkenerosionsprozesses aus, dass diesen Parametern Rechnung zu tragen ist.

Es stellt aber keine in der Praxis vertretbare technische Lösung dar, den bekannten Steuerungen noch zahlreichere Parameter der Bearbeitung des Werkstücks und noch mehr Information über die momentan herrschenden und früher vorgefundenen Prozessbedingungen zuzuführen. Die Komplexität des Funkenerosionsprozesses ist solcher Art, dass unter vertretbarem Aufwand kein Algorithmus zur Verarbeitung aller für den Funkenerosionsprozess als einschlägig bekannten Parameter aufstellbar bzw. implementierbar ist. Beim Stand der Technik hat man sich stets mit Kompromisslösungen abfinden müssen.

Aufgabe der Erfindung ist es daher, ein Verfahren und eine Vorrichtung der eingangs erwähnten Art vorzuschlagen, bei denen die den Funkenerosionsprozess bestimmenden Steuerungen, wie beispielsweise die Steuerung der Lage der Funkenerosionselektrode in bezug auf das Werkstück, die Steuerung der Spülung im Bereich des Arbeitsspalts und die Steuerung der Zufuhr von elektrischer Energie zur Funkenstrecke, unter vertretbarem Aufwand alle als einschlägig angesehenen Parameter und deren dem Fachmann bekannten Wechselwirkungen untereinander berücksichtigen, wobei der Funkenerosionsprozess in Echtzeit bezüglich aller seiner Parameter gesteuert wird.

Zur Lösung dieser Aufgabe ist ein Verfahren der eingangs erwähnten Art erfindungsgemäss dadurch gekennzeichnet, dass einer der zugeführten Parameter entsprechend den in der Logikeinrichtung gespeicherten Regeln geändert wird, wenn sich ein anderer der zugeführten Parameter ändert.

Die Erfindung ermöglicht, in der Logikeinrichtung aus mindestens zwei Eingangswerten, die demselben momentan herrschenden Zustand des Funkenerosionsprozesses entsprechen, einen einzelnen Ausgangswert zu erzeugen und zur Steuerung des einen ihr zugeführten Parameters in Abhängigkeit vom anderen zu verwenden.

Vorzugsweise wird der Logikeinrichtung mindestens ein erster Parameter zugeführt, der einer gegebenenfalls in einer Tiefpassfilterschaltung geglätteten Differenz zwischen einem Ist-Wert und einem Soll-Wert einer Zündverzögerung einer Funkenzündung im Bereich einer Funkenstrecke der Funkenerosionsmaschine entspricht.

Vorzugsweise wird der Logikeinrichtung mindestens ein zweiter Parameter zugeführt, der einer Instabilität des Funkenerosionsprozesses entspricht.

Diese Instabilität drückt sich durch kurzzeitige Schwankungen eines oder mehrerer Betriebsparameter des Funkenerosionsprozesses aus. Demgegenüber werden die Betriebsparameter des Funkenerosionsprozesses üblicherweise als Mittelwerte über Erfassungszeiten in der Grössenordnung von einer Minute oder mehr erfasst. Als kurzzeitig sind daher solche Variationen zu verstehen, welche einen Betriebsparameter des Funkenerosionsprozesses vom Mittelwert abweichen lassen, ohne diesen Mittelwert wesentlich zu verändern. Beispielsweise sind der üblicherweise ermittelte Vorschub der Funkenerosionselektrode als Mittelwert des Variationsbereichs der Lage der Funkenerosionselektrode in bezug auf das Werkstück, und die üblicherweise ermittelte Vorschubgeschwindigkeit der Funkenerosionselektrode als Mittelwert der Variationsgeschwindigkeit der Lage der Funkenerosionselektrode in bezug auf das Werkstück zu verstehen.

Unter diesen Voraussetzungen kann der zweite Parameter einem kurzzeitigen Variationsbereich oder einer kurzzeitigen Variationsgeschwindigkeit der Lage der Funkenerosionselektrode in bezug auf das Werkstück oder noch einer Kombination davon, einem kurzzeitigen Variationsbereich oder einer kurzzeitigen Variationsgeschwindigkeit der Zündverzögerung oder noch einer Kombination davon, oder einem kurzzeitigen Variationsbereich oder einer kurzzeitigen Variationsgeschwindigkeit des Ausgangssignals der Logikeinrichtung oder noch einer Kombination davon entsprechen, beispielsweise eine Funktion davon sein und insbesondere dazu gleich oder proportional sein.

Dabei kann der vom Ausgangssignal der Logikeinrichtung gesteuerte Parameter vorzugsweise der Lage der Funkenerosionselektrode in bezug auf das Werkstück in der Funkenerosionsmaschine entsprechen.

Vorzugsweise wird das erfindungsgemässe Verfahren so ausgeführt, dass bei Bezeichnung des ersten Parameters mit $\delta$, des zweiten Parameters mit Inst und des Ausgangssignals der Logikeinrichtung mit $\epsilon$ sowie unter Verwendung der nachfolgenden Definitionen für die Bereiche der Werte der Parameter $\delta$ und Inst sowie des Ausgangssignals $\epsilon$

NB .. Negativ Gross     B .. Gross

NM .. Negativ Mittel     M .. Mittel

NS .. Negativ Klein     S .. Klein

ZO .. Etwa Null

PB .. Positiv Gross

PM .. Positiv Mittel

PS .. Positiv Klein

die Logikeinrichtung den ersten und den zweiten Parameter anhand der nachfolgenden Regeln :

Wenn $\delta$ in NS dann $\epsilon$ in NS

Wenn $\delta$ in ZO dann $\epsilon$ in ZO

Wenn $\delta$ in PS dann $\epsilon$ in PS

Wenn $\delta$ in NM und Inst in B dann $\epsilon$ in NS

Wenn $\delta$ in NM und Inst in M dann $\epsilon$ in NM

Wenn $\delta$ in NM und Inst in S dann $\epsilon$ in NM

Wenn $\delta$ in NB und Inst in B dann $\epsilon$ in NM

Wenn $\delta$ in NB und Inst in M dann $\epsilon$ in NB

Wenn $\delta$ in NB und Inst in S dann $\epsilon$ in NB

Wenn $\delta$ in PM und Inst in B dann $\epsilon$ in PS

Wenn $\delta$ in PM und Inst in M dann $\epsilon$ in PS

Wenn $\delta$ in PM und Inst in S dann $\epsilon$ in PM

Wenn $\delta$ in PB und Inst in B dann $\epsilon$ in PS

Wenn $\delta$ in PB und Inst in M dann $\epsilon$ in PM

Wenn $\delta$ in PB und Inst in S dann $\epsilon$ in PB

nach den Gesetzen der unscharfen Logik verarbeitet, um das Ausgangssignal $\epsilon$ der Logikeinrichtung erzeugen.

Vorzugsweise liegen dabei mindestens zwei benachbarte Bereiche von Werten des Ausgangssignals $\epsilon$ zwischen jeweiligen Grenzwerten, von denen zwei benachbarte Grenzwerte zwecks Optimierung des Verfahrens paarweise veränderbar sind.

Vorzugsweise können dabei die Grenzwerte paarweise um einen jeweils vorbestimmten Betrag geändert werden, nach Stabilisierung eines resultierenden neuen Zustands des Funkenerosionsprozesses eine entsprechende Variationsgeschwindigkeit der Lage der Funkenerosionselektrode in bezug auf das Werkstück (Vorschubgeschwindigkeit der Funkenerosionselektrode) ermittelt werden, die Aenderung der Grenzwerte mehrmals durchgeführt werden, die resultierenden Variationsgeschwindigkeiten (Vorschubgeschwindigkeiten) untereinander verglichen werden, und ein optimiertes Verfahren mit denjenigen optimierten Grenzwerten fortgesetzt werden, mit welchen die grösste resultierende Variationsgeschwindigkeit (Vorschubgeschwindigkeit) erreicht wurde.

Vorzugsweise kann ein solches Verfahren rekursiv mit den optimierten Grenzwerten wiederholt werden.

Eine erfindungsgemässe Vorrichtung zur Durchführung des erfindungsgemässen Verfahrens umfasst eine Funkenerosionselektrode, ein Werkstück, und eine Logikeinrichtung mit mindestens zwei Eingängen für einzugebende Parameter und mindestens einem Ausgang für ein Ausgangssignal, das einer Steuerung für mindestens einen Parameter zugeführt wird, wobei die Logikeinrichtung zum Speichern eines Satzes von Regeln zur Verarbeitung der ihr zugeführten Parameter nach den Gesetzen der unscharfen Logik ausgebildet ist.

Mit der Erfindung wird es möglich, den Einfluss vieler Parameter der Bearbeitung des Werkstücks in die Steuerung der Bewegung der Funkenerosionselektrode einzubeziehen.

Insbesondere wird mit der Ausbildung der Erfindung, bei welcher der erste Parameter einer Differenz oder geglätteten Differenz zwischen dem Ist-Wert und dem Soll-Wert der Zündverzögerung, der zweite Parameter einer Instabilität des Funkenerosionsprozesses und der gesteuerte Parameter dem Arbeitsspalt bzw. der Funkenstrecke entspricht, eine bedeutsame Stabilisierung des Funkenerosionsprozesses erreicht. Zudem und als Folge davon werden sowohl der Verschleiss der Funkenerosionselektrode als auch der Abtrag des Werkstücks und die Rauheit der damit bearbeiteten Flächen des Werkstücks verbessert, d.h. der Verschleiss und die Rauheit werden vermindert und der Abtrag wird vergrössert.

Nachstehend wird die Erfindung anhand der Zeichnung näher erläutert. Es zeigen:

Fig. 1 ein Prinzipschema einer erfindungsgemässen Vorrichtung in Verbindung mit einer Funkenerosionselektrode und einem Werkstück in einer Funkenerosionsmaschine;

Fig. 2 ein Diagramm des Zugehörigkeitsgrades eines Wertes der Zündverzögerung zu einer unscharfen Menge von möglichen Werten der Zündverzögerung;

Fig. 3 ein Diagramm des Zugehörigkeitsgrades eines Wertes der Instabilität zu einer unscharfen Menge von möglichen Werten der Instabilität;

Fig. 4 ein Diagramm des Zugehörigkeitsgrades eines Wertes des Ausgangssignals einer Logikeinrichtung zu einer unscharfen Menge von möglichen Werten dieses Ausgangssignals, mit festen Schwellen; und

Fig. 5 ein Diagramm des Zugehörigkeitsgrades eines Wertes des Ausgangssignals einer Logikeinrichtung zu einer unscharfen Menge von möglichen Werten dieses Ausgangssignals, mit optimierbaren Schwellen.

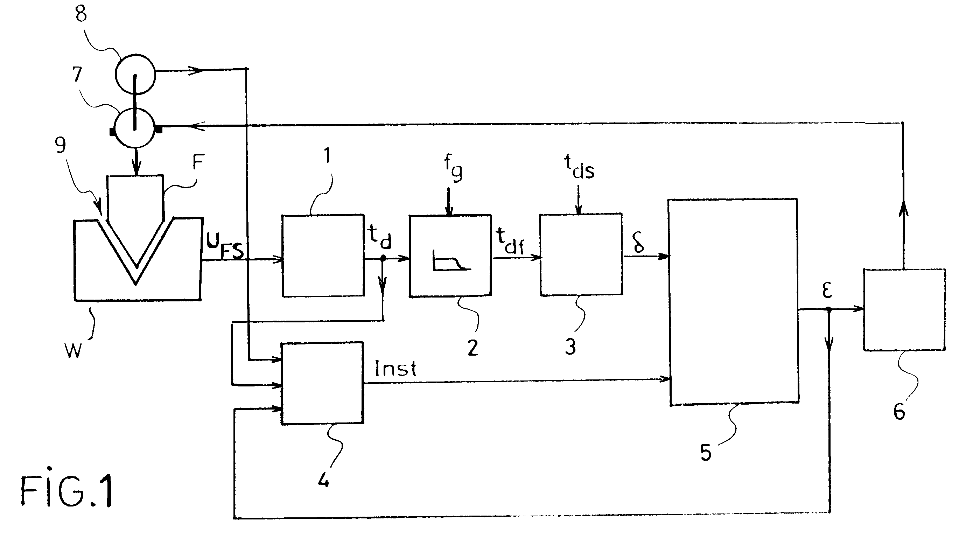

In Fig. 1 sind eine Funkenerosionselektrode F und ein Werkstück W einer Funkenerosionsmaschine schematisch dargestellt. Die Funkenerosionselektrode F wird in der vorliegenden Beschreibung als senkelektrode dargestellt, was aber nicht als Einschränkung zu verstehen ist. Zwischen der Funkenerosionselektrode F und dem Werkstück W liegt ein Arbeitsspalt bzw. eine Funkenstrecke 9. An dieser Funkenstrecke 9 wird auf bekannte und deshalb nicht dargestellte Weise die Funkenstreckenspannung oder Spannung am Arbeitsspalt $U_{FS}$ gemessen.

Die Funkenstreckenspannung $U_{FS}$ wird in einer Zündungsanalysenschaltung 1 auf ebenfalls bekannte und deshalb nicht dargestellte Weise mit einem Soll-Wert der Funkenstreckenspannung verglichen, um einen digitalen Ist-Wert $t_d$ der Zündverzögerung zu ergeben.

Der Ist-Wert $t_d$ der Zündverzögerung wird über einen digitalen Tiefpassfilter 2 mit einstellbarer Grenzfrequenz $f_g$ geführt und darin zu einem geglätteten Ist-Wert $t_{df}$ der Zündverzögerung verarbeitet. Die Grenzfrequenz $f_g$ des Tiefpassfilters 2 wird als Funktion $f_g(T,P,I)$ der Pulsdauer T, der Pausendauer P und der Stromamplitude I eingestellt. Ein solcher digitaler Tiefpassfilter und seine Verwendung sind beispielsweise aus den bereits erwähnten EP-A-0333170 oder US-A-4864091 bekannt.

In einer Vergleicherschaltung 3 wird der geglättete Ist-Wert $t_{df}$ der Zündverzögerung mit einem Soll-Wert $t_{ds}$ verglichen, um einen digitalen Wert $\delta$ der geglätteten Differenz zwischen dem Ist-Wert und dem Soll-Wert der Zündverzögerung zu ergeben.

Dieser digitale Wert $\delta$ der geglätteten Zündverzögerungsdifferenz wird als erster Eingangsparameter Logikeinrichtung 5 zur Verarbeitung von Werten nach den Gesetzen der unscharfen Logik (Fuzzy-Logic-Schaltung) eingegeben. Eine solche Logikeinrichtung ist an sich bekannt und im Handel erhältlich, als Beispiel sei hier die Logikeinrichtung vom Typ FC110 DFP (Digital Fuzzy Processor) der Firma Togai InfraLogic Inc. in Irvine (California, U.S.A.) erwähnt.

In einer Aufbereitungsschaltung 4 wird ein Parameter, der einer Instabilität des Funkenerosionsprozesses entspricht, gegebenenfalls nach seiner Digitalisierung für die weitere Verwendung in der Fuzzy-Logic-Schaltung 5 aufbereitet. Diese Instabilität des Funkenerosionsprozesses wird in der vorliegenden Beschreibung als Absolutwert, also stets positiv dargestellt, was aber nicht als Einschränkung zu verstehen ist.

Ein möglicher Parameter, der einer Instabilität des Funkenerosionsprozesses entspricht, ist der kurzzeitige Variationsbereich oder die kurzzeitige Variationsgeschwindigkeit der Lage der Funkenerosionselektrode in bezug auf das Werkstück oder noch eine Kombination davon, in anderen Worten der kurzzeitige Variationsbereich oder die kurzzeitige Variationsgeschwindigkeit der Breite des Arbeitsspalts bzw. der Funkenstrecke 9 oder noch eine davon abhängige Grösse.

Die Breite des Arbeitsspalts bzw. der Funkenstrecke 9 oder die davon abhängige Grösse werden üblicherweise als Mittelwerte über Erfassungszeiten in der Grössenordnung von einer Minute oder mehr erfasst. Demgegenüber sind solche Variationen als kurzzeitig zu verstehen, welche die Breite des Arbeitsspalts bzw. der Funkenstrecke 9 oder die davon abhängige Grösse vom Mittelwert abweichen lassen, ohne diesen Mittelwert wesentlich zu verändern.

Die Funkenerosionselektrode F wird von einem Motor 7 bewegt und ihre Bewegung wird von einem Sensor 8 erfasst. Der Sensor 8 wird in der vorliegenden Beschreibung als Codierer auf der Welle des Motors 7 dargestellt, was aber nicht als Einschränkung zu verstehen ist. Das Signal aus dem Sensor 8 wird der Aufbereitungsschaltung 4 zugeführt, um darin zu einem digitalen, der Instabilität des Funkenerosionsprozesses entsprechenden Signal "Inst" aufbereitet zu werden. Zu diesem Zweck wird das Signal aus dem Sensor 8 in der Aufbereitungsschaltung 4 beispielsweise über einen Hochpass und danach über einen Tiefpass geführt.

Der Motor 7 wird von einem Antrieb 6 gesteuert, der als Eingangsgrösse ein Ausgangssignal $\epsilon$ der Logikeinrichtung 5 oder eine dazu proportionale Grösse erhält.

Ein anderer möglicher Parameter, der einer Instabilität des Funkenerosionsprozesses entspricht, ist der kurzzeitige Variationsbereich oder die kurzzeitige Variationsgeschwindigkeit des Ausgangssignals $\epsilon$ der Logikeinrichtung 5 oder noch eine davon abhängige Grösse. Dieses Ausgangssignal $\epsilon$ wird vom Ausgang der Logikeinrichtung 5 auch der Aufbereitungsschaltung 4 zugeführt, um darin zu einem digitalen, der Instabilität des Funkenerosionsprozesses entsprechenden Signal "Inst" aufbereitet zu werden.

Ein noch anderer möglicher Parameter, der einer Instabilität des Funkenerosionsprozesses entspricht, ist der kurzzeitige Variationsbereich oder die kurzzeitige Variationsgeschwindigkeit des Ist-Werts $t_d$ der Zündverzögerung oder noch eine davon abhängige Grösse. Dieser Ist-Wert $t_d$ wird vom Ausgang der Zündungsanalysenschaltung 1 auch der Aufbereitungsschaltung 4 zugeführt, um darin zu einem digitalen, der Instabilität des Funkenerosionsprozesses entsprechenden Signal "Inst" aufbereitet zu werden.

Es ist zu verstehen, dass die drei vorerwähnten, der Instabilität des Funkenerosionsprozesses entsprechenden Parameter einzeln oder in beliebig gewünschter, beispielsweise linearer Kombination davon in den Aufbereitungsschaltung 4 zu einem digitalen, der Instabilität des Funkenerosionsprozesses entsprechenden Signal "Inst" aufbereitet werden können. Dieses Signal "Inst" ist, wie bereits erwähnt, in der im vorliegenden als Beispiel angegebenen Ausbildung ein Absolutwert, also stets positiv, was aber nicht als Einschränkung zu verstehen ist, d.h. es sind auch Ausbildungen mit einem vorzeichenbehaftetem Signal "Inst" möglich.

Es ist ebenfalls zu verstehen, dass die drei vorerwähnten, der Instabilität des Funkenerosionsprozesses entsprechenden Parameter nicht die einzigen zu diesem Zweck verwendbaren Parameter sind. Unter anderen verwendbaren Parametern können zitiert werden: (i) im Verhältnis zur Anzahl der Impulse pro Zeiteinheit in der Funkenstrecke, die Anzahl der Kurzschlüsse, in anderen Worten die relative Anzahl der Impulse, die eine vorbestimmte erste Spannungsschwelle nicht erreichen; (ii) im Verhältnis zur Anzahl der Impulse pro Zeiteinheit in der Funkenstrecke, die Anzahl der Entladungen ohne Deionisation in der Funkenstrecke, in anderen Worten die relative Anzahl der Impulse, die eine vorbestimmte zweite Spannungsschwelle nicht erreichen, wobei die zweite vorbestimmte Spannungsschwelle höher ist als die erste vorbestimmte spannungsschwelle; (iii) im Verhältnis zur Anzahl der Impulse pro Zeiteinheit in der Funkenstrecke, die Anzahl der Lichtbogen, in anderen Worten die relative Anzahl der Impulse, die eine vorbestimmte Form und daher einen vorbestimmten Zeitverlauf nicht aufweisen; (iv) und dergleichen mehr.

Die Bildung der in der Logikeinrichtung 5 nach den Gesetzen der unscharfen Logik zu verarbeitenden Mengen wird nun näher erläutert. Zunächst werden die positiven und/oder negativen Werte in Bereiche "gross", "mittel" und "klein" sowie "null" unterteilt. Wenn zudem P für Positiv, N für Negativ, B für gross ("Big"), M für mittel ("Medium"), S für klein ("Small") und ZO für null ("ZerO") gesetzt wird, ergeben sich die nachfolgend definierten Bereiche:

NB .. Negativ Gross      B .. Gross
NM .. Negativ Mittel      M .. Mittel
NS .. Negativ Klein      S .. Klein
ZO .. Etwa Null
PB .. Positiv Gross
PM .. Positiv Mittel
PS .. Positiv Klein

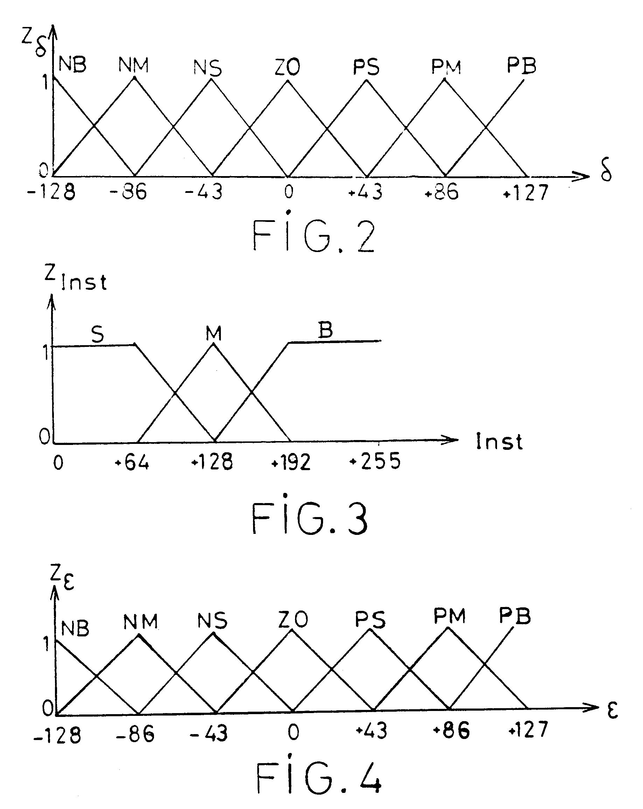

In Fig. 2 ist ein Diagramm des Zugehörigkeitsgrades $Z_\delta$ eines digitalen Wertes $\delta$ der geglätteten Zündverzögerungsdifferenz zu einer unscharfen Menge von möglichen Werten davon dargestellt. Der Zugehörigkeitsgrad $Z_\delta$ wird durch Werte zwischen 0 und 1 ausgedrückt.

Die digitalen Werte $\delta$ variieren in der im vorliegenden als Beispiel angegebenen Ausbildung zwischen -128 und +127, entsprechend einer 8-bit-Darstellung dieser Werte. Dieser Wertebereich zwischen -128 und +127 wird in 6 etwa gleiche Unterbereiche unterteilt, die entsprechenden Grenzwerte sind -128, -86, -43, 0, +43, +86, +127.

Der Zugehörigkeitsgrad $Z_\delta$ von $\delta$ zum Unterbereich NB sinkt linear von $Z_\delta = 1$ bei $\delta = -128$ auf $Z_\delta = 0$ bei $\delta = -86$. Der Zugehörigkeitsgrad von $\delta$ zum Unterbereich NM steigt linear von $Z_\delta = 0$ bei $\delta = -128$ auf $Z_\delta = 1$ bei $\delta = -86$ und sinkt dann linear zurück auf $Z_\delta = 0$ bei $\delta = -43$. Der Zugehörigkeitsgrad von $\delta$ zum Unterbereich NS steigt linear von $Z_\delta = 0$ bei $\delta = -86$ auf $Z_\delta = 1$ bei $\delta = -43$ und sinkt dann linear zurück auf $Z_\delta = 0$ bei $\delta = 0$. Der Zugehörigkeitsgrad von $\delta$ zum Unterbereich ZO steigt linear von $Z_\delta = 0$ bei $\delta = -43$ auf $Z_\delta = 1$ bei $\delta = -0$ und sinkt dann linear zurück auf $Z_\delta = 0$ bei $\delta = +43$. Der Zugehörigkeitsgrad von $\delta$ zum

Unterbereich PS steigt linear von $Z_\delta = 0$ bei $\delta = 0$ auf $Z_\delta = 1$ bei $\delta = +43$ und sinkt dann linear zurück auf $Z_\delta = 0$ bei $\delta = +86$. Der Zugehörigkeitsgrad von $\delta$ zum Unterbereich PM steigt linear von $Z_\delta = 0$ bei $\delta = +43$ auf $Z_\delta = 1$ bei $\delta = +86$ und sinkt dann linear zurück auf $Z_\delta = 0$ bei $\delta = +127$. Der Zugehörigkeitsgrad von $\delta$ zum Unterbereich PB steigt linear von $Z_\delta = 0$ bei $\delta = +86$ auf $Z_\delta = 1$ bei $\delta = +127$.

In Fig. 3 ist ein Diagramm des Zugehörigkeitsgrades $Z_{Inst}$ eines digitalen Wertes "Inst" der Instabilität des Funkenerosionsprozesses entsprechenden Signals zu einer unscharfen Menge von möglichen Werten davon dargestellt. Der Zugehörigkeitsgrad $Z_{Inst}$ wird durch Werte zwischen 0 und 1 ausgedrückt.

Die digitalen Werte "Inst" variieren in der im vorliegenden als Beispiel angegebenen Ausbildung zwischen 0 und $+255$, entsprechend einer 8-bit-Darstellung dieser Werte. Dieser Wertebereich zwischen 0 und $+255$ wird in 4 etwa gleiche Unterbereiche unterteilt, die entsprechenden Grenzwerte sind 0, $+64$, $+128$, $+192$, $+255$.

Der Zugehörigkeitsgrad von "Inst" zum Unterbereich S bleibt konstant bei $Z_{Inst} = 1$ zwischen Inst = -0 und Inst = $+64$ und sinkt dann linear auf $Z_{Inst} = 0$ bei Inst = $+128$. Der Zugehörigkeitsgrad von Inst zum Unterbereich M steigt linear von $Z_{Inst} = 0$ bei Inst = $+64$ auf $Z_{Inst} = 1$ bei Inst = $+128$ und sinkt dann linear auf $Z_{Inst} = 0$ bei Inst = $+192$. Der Zugehörigkeitsgrad von Inst zum Unterbereich B steigt linear von $Z_{Inst} = 0$ bei Inst = $+128$ auf $Z_{Inst} = 1$ bei Inst = $+192$ und bleibt dann konstant bei $Z_{Inst} = 1$ zwischen Inst = $+192$ und Inst = $+255$.

In Fig. 4 ist ein Diagramm des Zugehörigkeitsgrades $Z_\epsilon$ eines digitalen Wertes $\epsilon$ des Ausgangssignals der Logikeinrichtung 5 zu einer unscharfen Menge von möglichen Werten davon dargestellt. Der Zugehörigkeitsgrad $Z_\epsilon$ wird durch Werte zwischen 0 und 1 ausgedrückt.

Die digitalen Werte $\epsilon$ variieren in der im vorliegenden als Beispiel angegebenen Ausbildung zwischen -128 und $+127$, entsprechend einer 8-bit-Darstellung dieser Werte. Dieser Wertebereich zwischen -128 und $+127$ wird in 6 etwa gleiche Unterbereiche unterteilt, die entsprechenden Grenzwerte sind -128, -86, -43, 0, $+43$, $+86$, $+127$.

Der Zugehörigkeitsgrad $Z_\epsilon$ von $\epsilon$ zum Unterbereich NB sinkt linear von $Z_\epsilon = 1$ bei $\epsilon = -128$ auf $Z_\epsilon = 0$ bei $\epsilon = -86$. Der Zugehörigkeitsgrad von $\epsilon$ zum Unterbereich NM steigt linear von $Z_\epsilon = 0$ bei $\epsilon = -128$ auf $Z_\epsilon = 1$ bei $\epsilon = -86$ und sinkt dann linear zurück auf $Z_\epsilon = 0$ bei $\epsilon = -43$. Der Zugehörigkeitsgrad von $\epsilon$ zum Unterbereich NS steigt linear von $Z_\epsilon = 0$ bei $\epsilon = -86$ auf $Z_\epsilon = 1$ bei $\epsilon = -43$ und sinkt dann linear zurück auf $Z_\epsilon = 0$ bei $\epsilon = 0$. Der Zugehörigkeitsgrad von $\epsilon$ zum Unterbereich ZO steigt linear von $Z_\epsilon = 0$ bei $\epsilon = -43$ auf $Z_\epsilon = 1$ bei $\epsilon = 0$ und sinkt dann linear zurück auf $Z_\epsilon = 0$ bei $\epsilon = +43$. Der Zugehörigkeitsgrad von $\epsilon$ zum Unterbereich PS steigt linear von $Z_\epsilon = 0$ bei $\epsilon = 0$ auf $Z_\epsilon = 1$ bei $\epsilon = +43$ und sinkt dann linear zurück auf $Z_\epsilon = 0$ bei $\epsilon = +86$. Der Zugehörigkeitsgrad von $\epsilon$ zum Unterbereich PM steigt linear von $Z_\epsilon = 0$ bei $\epsilon = +43$ auf $Z_\epsilon = 1$ bei $\epsilon = +86$ und sinkt dann linear zurück auf $Z_\epsilon = 0$ bei $\epsilon = +127$. Der Zugehörigkeitsgrad von $\epsilon$ zum Unterbereich PB steigt linear von $Z_\epsilon = 0$ bei $\epsilon = +86$ auf $Z_\epsilon = 1$ bei $\epsilon = +127$.

Die vorangehend genannten Parameter werden, je nach ihrer Zugehörigkeit bzw. ihrem Zugehörigkeitsgrad zu den vorangehend definierten Unterbereichen, nach den folgenden Regeln verarbeitet:

Wenn $\delta$ in NS dann $\epsilon$ in NS

Wenn $\delta$ in ZO dann $\epsilon$ in ZO

Wenn $\delta$ in PS dann $\epsilon$ in PS

Wenn $\delta$ in NM und Inst in B dann $\epsilon$ in NS

Wenn $\delta$ in NM und Inst in M dann $\epsilon$ in NM

Wenn $\delta$ in NM und Inst in S dann $\epsilon$ in NM

Wenn $\delta$ in NB und Inst in B dann $\epsilon$ in NM

Wenn $\delta$ in NB und Inst in M dann $\epsilon$ in NB

Wenn $\delta$ in NB und Inst in S dann $\epsilon$ in NB

Wenn $\delta$ in PM und Inst in B dann $\epsilon$ in PS

Wenn $\delta$ in PM und Inst in M dann $\epsilon$ in PS

Wenn $\delta$ in PM und Inst in S dann $\epsilon$ in PM

Wenn $\delta$ in PB und Inst in B dann $\epsilon$ in PS

Wenn $\delta$ in PB und Inst in M dann $\epsilon$ in PM

Wenn $\delta$ in PB und Inst in S dann $\epsilon$ in PB

Beim Vorgehen nach den bereits erwähnten EP-A-0333170 oder US-A-4864091 wird aus einer Differenz zwischen einem Ist-Wert und einem Soll-Wert eines ausgewählten Parameters, der zur Steuerung der Bewegung der Funkenerosionselektrode herangezogen wird, in einem Rechner ein Fehlersignal gebildet, das der Steuerung der Bewegung der Funkenerosionselektrode zugeleitet wird. Die erwähnte Differenz ist das Eingangssignal des Rechners und das Fehlersignal ist das Ausgangssignal des Rechners. Im Rechner wird das Verhältnis dessen Eingangssignals zu dessen Ausgangssignal in Abhängigkeit von einem anderen ausgewählten Parameter verändert. Beim Vorgehen nach EP-A-0333170 oder US-A-4864091 ist der erstgenannte ausgewählte Parameter die Differenz zwischen einem Ist-Wert und einem Soll-Wert der Lage der Funkenerosionselektrode in bezug auf das Werkstück, während der zweitgenannte ausgewählte Parameter die Zündverzögerung ist. Nach EP-A-0333170 oder US-A-4864091 verändert der Rechner das Verhältnis seines Eingangssignals zu seinem Ausgangssignal gemäss den in einer Festwert-Tabelle festgehaltenen Abhängigkeiten. Wie eingangs erwähnt, kann ein solches Vorgehen der Komplexität des Funkenerosionsprozesses nicht gerecht werden. Beispielsweise genügt es nicht, die Instabilität aufgrund der Zeitableitung des Ausgangssignals der Logikeinrichtung 5 zu berechnen, weil die mechanischen Zeitkonstanten einen Dämpfungseffekt verursachen.

Beim erfindungsgemässen Verfahren wird von der Logikeinrichtung 5, zusätzlich zu einer an sich bekannten Signalverarbeitung beispielsweise nach EP-A-0333170 oder US-A-4864091, das Ausgangssignal $\epsilon$ der Logikeinrichtung 5 anhand der in der Logikeinrichtung 5 gespeicherten Regeln nach den Gesetzen der unscharfen Logik ("fuzzy logic") verändert. Dazu werden auf an sich bekannte Weise die für das Ausgangssignal $\epsilon$ einschlägigen Mengen im Verhältnis ihres Zugehörigkeitsgrades kombiniert und ausgewertet.

Beispielsweise werden die einschlägigen Mengen nach dem Vorgehen der sogenannten Max-Min-Inferenz entsprechend ihrem Zugehörigkeitsgrad reduziert und dann überlagert, wodurch im Diagramm des Zugehörigkeitsgrades als Funktion des Ausgangssignals $\epsilon$ eine resultierende Fläche entsteht, worauf der Schwerpunkt dieser Fläche bestimmt und die Abszisse dieses Schwerpunkts als Wert des resultierenden Ausgangssignals $\epsilon$ verwendet wird.

Zur Vereinfachung der nachstehenden Erläuterung wird davon ausgegangen, dass die vorangehend erwähnte, an sich bekannte Signalverarbeitung in einer einfachen Durchleitung des Eingangssignals $\delta$ der Logikeinrichtung 5 zu deren Ausgang besteht. In anderen Worten, ohne Signalverarbeitung in der Logikeinrichtung 5 anhand der darin gespeicherten Regeln nach den Gesetzen der unscharfen Logik ("fuzzy logic") wäre das Ausgangssignal $\epsilon$ der Logikeinrichtung 5 gleich ihrem Eingangssignal $\delta$.

Beim erfindungsgemässen Verfahren ist das Ausgangssignal $\epsilon$ der Logikeinrichtung 5 nur dann gleich ihrem Eingangssignal $\delta$, wenn $\delta$ klein ist. Wenn $\delta$ positiv und die Instabilität gross ist, wird das Ausgangssignal $\epsilon$ der Logikeinrichtung 5 kleiner als ihr Eingangssignal $\delta$, um die Empfindlichkeit des Steuerungssystems zu reduzieren.

Wenn $\delta$ negativ und die Instabilität gross ist, wird das Ausgangssignal $\epsilon$ der Logikeinrichtung 5 auch kleiner als ihr Eingangssignal $\delta$, aber in geringerem Masse als im Fall, wo $\delta$ positiv ist. Wenn nämlich ein Kurzschluss am Arbeitsspalt oder sonst eine Entartung des Funkenerosionsprozesses entsteht, ist der Arbeitsspalt schnell zu vergrössern, deswegen hat hier die Sicherheit Priorität über die Stabilität des Funkenerosionsprozesses.

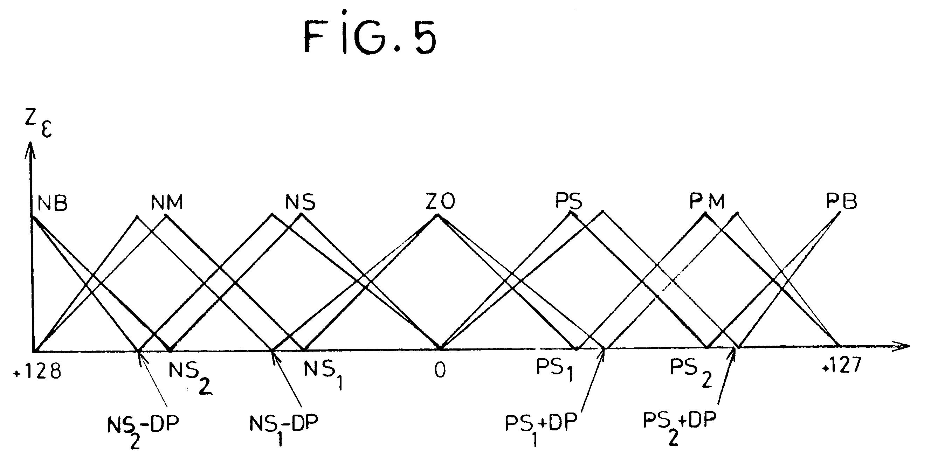

Eine Weiterbildung des im Zusammenhang mit Fig. 4 beschriebenen Verfahrens und der entsprechenden Vorrichtung wird nun im Zusammenhang mit Fig. 5 beschrieben.

In Fig. 5 ist wie in Fig. 4 ein Diagramm des Zugehörigkeitsgrades $Z_\epsilon$ eines digitalen Wertes $\epsilon$ des Ausgangssignals der Logikeinrichtung 5 zu einer unscharfen Menge von möglichen Werten davon dargestellt. Der Zugehörigkeitsgrad $Z_\epsilon$ wird durch Werte zwischen 0 und 1 ausgedrückt.

Die digitalen Werte $\epsilon$ variieren in der im vorliegenden als Beispiel angegebenen Ausbildung zwischen -128 und +127, entsprechend einer 8-bit-Darstellung dieser Werte. Dieser Wertebereich zwischen -128 und +127 wird in 6 Unterbereiche unterteilt, die im Unterschied zur Ausbildung nach Fig. 4 zwecks Optimierung des erfindungsgemässen Verfahrens veränderbar sind. Die entsprechenden Grenzwerte sind -128, $NS_2$, $NS_1$, 0, $PS_1$, $PS_2$, +127.

Im Anfangszustand sind diese Grenzwerte die gleichen wie bei der Ausbildung nach Fig. 4, d.h. dann gilt

$$NS_2 = -86 \qquad PS_1 = +43$$
$$NS_1 = -43 \qquad PS_2 = +86$$

Der Zugehörigkeitsgrad $Z_\epsilon$ von $\epsilon$ zum Unterbereich NB sinkt linear von $Z_\epsilon = 1$ bei $\epsilon = -128$ auf $Z_\epsilon = 0$ bei $\epsilon = NS_2$. Der Zugehörigkeitsgrad von $\epsilon$ zum Unterbereich NM steigt linear von $Z_\epsilon = 0$ bei $\epsilon = -128$ auf $Z_\epsilon = 1$ bei $\epsilon = NS_2$ und sinkt dann linear zurück auf $Z_\epsilon = 0$ bei $\epsilon = NS_1$. Der Zugehörigkeitsgrad von $\epsilon$ zum Unterbereich NS steigt linear von $Z_\epsilon = 0$ bei $\epsilon = NS_2$ auf $Z_\epsilon = 1$ bei $\epsilon = NS_1$ und sinkt dann linear zurück auf $Z_\epsilon = 0$ bei $\epsilon = 0$. Der Zugehörigkeitsgrad von $\epsilon$ zum Unterbereich ZO steigt linear von $Z_\epsilon = 0$ bei $\epsilon = NS_1$ auf $Z_\epsilon = 1$ bei $\epsilon = 0$ und sinkt dann linear zurück auf $Z_\epsilon = 0$ bei $\epsilon = PS_1$. Der Zugehörigkeitsgrad von $\epsilon$ zum Unterbereich PS steigt linear von $Z_\epsilon = 0$ bei $\epsilon = 0$ auf $Z_\epsilon = 1$ bei $\epsilon = PS_1$ und sinkt dann linear zurück auf $Z_\epsilon = 0$ bei $\epsilon = PS_2$. Der Zugehörigkeitsgrad von $\epsilon$ zum Unterbereich PM steigt linear von $Z_\epsilon = 0$ bei $\epsilon = PS_1$ auf $Z_\epsilon = 1$ bei $\epsilon = PS_2$ und sinkt dann linear zurück auf $Z_\epsilon = 0$ bei $\epsilon = +127$. Der Zugehörigkeitsgrad von $\epsilon$ zum

Unterbereich PB steigt linear von $Z_\epsilon = 0$ bei $\epsilon = PS_2$ auf $Z_\epsilon = 1$ bei $\epsilon = +127$.

Die vorangehend genannten Parameter werden, je nach ihrer Zugehörigkeit bzw. ihrem Zugehörigkeitsgrad zu den vorangehend definierten Unterbereichen, nach den gleichen Regeln wie im vorangehenden verarbeitet.

Zur Optimierung des erfindungsgemässen Verfahrens werden die Grenzwerte $NS_2$, $NS_1$, $PS_1$, $PS_2$ paarweise um einen jeweils vorbestimmten Betrag DP geändert, worauf nach einer Wartezeit die Vorschubgeschwindigkeit (Variationsgeschwindigkeit der Lage der Funkenerosionselektrode in bezug auf das Werkstück) ermittelt wird. Dann wird diejenige Kombination von Grenzwerten ausgewählt, welche die grösste Vorschubgeschwindigkeit ergeben hat. Stets ausgehend von der zuletzt ausgewählten Kombination von Grenzwerten wird diese Optimierung wiederholt, um die grösstmögliche Vorschubgeschwindigkeit anzustreben und beizubehalten. Die erwähnte Wartezeit ist beispielsweise die Zeitdauer, nach welcher sich ein im wesentlichen konstanter neuer Wert der Vorschubgeschwindigkeit eingestellt hat: diese Zeitdauer ist experimentell bestimmbar und liegt im allgemeinen in der Grössenordnung von einer Minute, obschon sie mit der Pulsdauer T, der Pausendauer P und der Stromamplitude I variieren kann.

Diese vorangehend beschriebene Optimierung des erfindungsgemässen Verfahrens kann manuell oder auch automatisch, beispielsweise von einem Rechner gesteuert durchgeführt werden.

Beispielsweise werden die Grenzwerte $NS_2$, $NS_1$, $PS_1$, $PS_2$ paarweise um den Digitalwert $\pm 3$ bzw. $\pm 6$ geändert, was gemäss folgender Tabelle jeweils einen Betriebspunkt (B'punkt) $P_0$, $P_1$, $P_2$, $P_3$, $P_4$ und einen entsprechenden Abtrag des Werkstücks ergibt, wobei dieser Abtrag aus der festgestellten Vorschubgeschwindigkeit geschätzt wird:

| $NS_2$ | $NS_1$ | $PS_1$ | $PS_2$ | B'punkt | Abtrag (mm³/min) |
|--------|--------|--------|--------|---------|------------------|
| -86 | -43 | +43 | +86 | $P_0$ | 15 |
| -86 | -43 | +46 | +89 | $P_1$ | 22 |
| -86 | -43 | +40 | +83 | $P_2$ | 12 |
| -83 | -40 | +43 | +86 | $P_3$ | 18 |
| -89 | -46 | +43 | +86 | $P_4$ | 18 |

Der optimale Betriebspunkt dieser Reihe von Suchvorgängen liegt bei $P_1$ mit einem Abtrag von 22 mm³/min. Die entsprechende Kombination von Grenzwerten $NS_2 = -86$, $NS_1 = -43$, $PS_1 = +46$, $PS_2 = +89$ wird als neue Kombination ausgewählt und verwendet, bis, ausgehend davon, der Optimierungsvorgang wiederholt wird.

Es ist dabei zweckmässig, den Variationsbereich der Grenzwerte $NS_2$, $NS_1$, $PS_1$, $PS_2$ auf den Bereich zwischen einem Minimalwert und einem Maximalwert zu beschränken. Beispielsweise wird der Variationsbereich der Grenzwerte $NS_2$, $NS_1$, $PS_1$, $PS_2$ auf den Bereich von $\pm 21$ um die jeweiligen Grenzwerte im Anfangszustand beschränkt, wenn diese gleich $NS_2 = -86$, $NS_1 = -43$, $PS_1 = +43$, $PS_2 = +86$ sind, so dass die betreffenden Bereiche aneinander angrenzen, ohne zu überlappen.

Von Vorteil ist beim bevorzugten und hier beschriebenen erfindungsgemässen Verfahren, dass das Steuerungssystem auf die tatsächlichen Bewegungen der Funkenerosionselektrode reagiert, so dass man gut beurteilen kann, welche Bewegungen wirklich ausgeführt werden und welcher Anteil dieser Bewegungen durch die mechanische Übertragung gedämpft wird, wie dies besonders bei grossen Funkenerosionsmaschinen der Fall ist.

Es ist zu verstehen, dass mit Ausnahme der Logikeinrichtung 5 alle in Fig. 1 gezeigten Schaltungen zusammen in einem einzigen Rechner oder Rechnerelement umfasst und darin implementiert werden können.

**Patentansprüche**

1. Verfahren zur Steuerung eines Funkenerosionsprozesses in einer Funkenerosionsmaschine mit einer Funkenerosionselektrode (F) und einem Werkstück (W), wobei mindestens zwei Parameter ($\delta$,Inst), von denen bekannt ist, dass sie im wesentlichen einem selben momentan herrschenden Zustand des Funkenerosionsprozesses entsprechen und dass ihre Variation einen momentan herrschenden Zustand des Funkenerosionsprozesses beeinflusst, einzeln oder als Kombination davon einer Logikeinrichtung (5) zugeführt werden, um mindestens ein Ausgangssignal ($\epsilon$) dieser Logikeinrichtung zu erzeugen, das einer Steuerung (6) für mindestens einen der genannten Parameter ($\delta$) zugeführt wird, wobei die der Logikeinrichtung (5) zugeführten Parameter ($\delta$,Inst) darin anhand von darin gespeicherten Regeln nach den Gesetzen der unscharfen Logik verarbeitet werden und die Steuerung (6) den zu ändernden

EP 0 548 516 B1

Parameter ($\delta$) so ändert, dass der momentan herrschende Zustand des Funkenerosionsprozesses einem momentan gewünschten Zustand des Funkenerosionsprozesses angeglichen oder zumindest angenähert wird,

**dadurch gekennzeichnet, dass**

einer der zugeführten Parameter ($\delta$) entsprechend den in der Logikeinrichtung (5) gespeicherten Regeln geändert wird, wenn sich ein anderer (Inst) der zugeführten Parameter ändert.

2. Verfahren nach Anspruch 1, dadurch gekennzeichnet, dass der Logikeinrichtung (5) mindestens ein erster Parameter ($\delta$) zugeführt wird, der einer Differenz zwischen einem Ist-Wert ($t_{df}$) und einem Soll-Wert ($t_{ds}$) einer Zündverzögerung einer Funkenzündung im Bereich einer Funkenstrecke (9) der Funkenerosionsmaschine entspricht.

3. Verfahren nach Anspruch 2, dadurch gekennzeichnet, dass der Logikeinrichtung (5) ein erster Parameter ($\delta$) zugeführt wird, der einer in einer Tiefpassfilterschaltung (2) geglätteten Differenz zwischen dem Ist-Wert ($t_d$) und dem Soll-Wert ($t_{ds}$) der Zündverzögerung der Funkenzündung im Bereich der Funkenstrecke (9) der Funkenerosionsmaschine entspricht.

4. Verfahren nach Anspruch 2, dadurch gekennzeichnet, dass der Logikeinrichtung (5) mindestens ein zweiter Parameter zugeführt wird, der einer Instabilität (Inst) des Funkenerosionsprozesses entspricht.

5. Verfahren nach Anspruch 4, dadurch gekennzeichnet, dass der zweite Parameter einem kurzzeitigen Variationsbereich oder einer kurzzeitigen Variationsgeschwindigkeit der Lage der Funkenerosionselektrode (F) in bezug auf das Werkstück (W) oder einer Kombination davon entspricht.

6. Verfahren nach Anspruch 4, dadurch gekennzeichnet, dass der zweite Parameter einem kurzzeitigen Variationsbereich oder einer kurzzeitigen Variationsgeschwindigkeit der Zündverzögerung oder einer Kombination davon entspricht.

7. Verfahren nach Anspruch 4, dadurch gekennzeichnet, dass der zweite Parameter einem kurzzeitigen Variationsbereich oder einer kurzzeitigen Variationsgeschwindigkeit des Ausgangssignals der Logikeinrichtung oder einer Kombination davon entspricht.

8. Verfahren nach Anspruch 1, dadurch gekennzeichnet, dass der vom Ausgangssignal ($\epsilon$) der Logikeinrichtung (5) gesteuerte Parameter der Lage der Funkenerosionselektrode (F) in bezug auf das Werkstück (W) in der Funkenerosionsmaschine entspricht.

9. Verfahren nach den Ansprüchen 2, 4 und 8, dadurch gekennzeichnet, dass bei Bezeichnung des ersten Parameters mit $\delta$, des zweiten Parameters mit Inst und des Ausgangssignals der Logikeinrichtung mit $\epsilon$ sowie unter Verwendung der nachfolgenden Definitionen für die Bereiche der Werte der Parameter $\delta$ und Inst sowie des Ausgangssignals $\epsilon$

NB .. Negativ Gross     B .. Gross

NM .. Negativ Mittel     M .. Mittel

NS .. Negativ Klein     S .. Klein

ZO .. Etwa Null

PB .. Positiv Gross

PM .. Positiv Mittel

PS .. Positiv Klein

die Logikeinrichtung (5) den ersten und den zweiten Parameter ($\delta$,Inst) anhand der nachfolgenden Regeln

Wenn $\delta$ in NS dann $\epsilon$ in NS

Wenn $\delta$ in ZO dann $\epsilon$ in ZO

Wenn $\delta$ in PS dann $\epsilon$ in PS

Wenn $\delta$ in NM und Inst in B dann $\epsilon$ in NS

Wenn $\delta$ in NM und Inst in M dann $\epsilon$ in NM

Wenn $\delta$ in NM und Inst in S dann $\epsilon$ in NM

Wenn $\delta$ in NB und Inst in B dann $\epsilon$ in NM

Wenn $\delta$ in NB und Inst in M dann $\epsilon$ in NB

Wenn $\delta$ in NB und Inst in S dann $\epsilon$ in NB

10

Wenn δ in PM und Inst in B dann ε in PS
Wenn δ in PM und Inst in M dann ε in PS
Wenn δ in PM und Inst in S dann ε in PM
Wenn δ in PB und Inst in B dann ε in PS
Wenn δ in PB und Inst in M dann ε in PM
Wenn δ in PB und Inst in S dann ε in PB

nach den Gesetzen der unscharfen Logik verarbeitet, um das Ausgangssignal (ε) der Logikeinrichtung (5) zu erzeugen.

**10.** Verfahren nach Anspruch 9, dadurch gekennzeichnet, dass mindestens zwei benachbarte Bereiche von Werten des Ausgangssignals (ε) zwischen jeweiligen Grenzwerten $(-128, NS_2, NS_1, 0, PS_1, PS_2, +127)$ liegen, von denen zwei benachbarte Grenzwerte $(NS_2, NS_1; PS_1, PS_2)$ zwecks Optimierung des Verfahrens paarweise veränderbar sind.

**11.** Verfahren nach Anspruch 10, dadurch gekennzeichnet, dass die Grenzwerte $(NS_2, NS_1; PS_1, PS_2)$ paarweise um einen jeweils vorbestimmten Betrag (DP) geändert werden, nach Stabilisierung eines resultierenden neuen Zustands des Funkenerosionsprozesses eine entsprechende Variationsgeschwindigkeit der Lage der Funkenerosionselektrode (F) in bezug auf das Werkstück (W) ermittelt wird, die Aenderung der Grenzwerte mehrmals durchgeführt wird, die resultierenden Variationsgeschwindigkeiten untereinander verglichen werden, und ein optimiertes Verfahren mit denjenigen optimierten Grenzwerten fortgesetzt wird, mit welchen die grösste resultierende Variationsgeschwindigkeit erreicht wurde.

**12.** Verfahren nach Anspruch 11, dadurch gekennzeichnet, dass es rekursiv mit den jeweils zuletzt ermittelten optimierten Grenzwerten wiederholt wird.

**13.** Anwendung des Verfahrens nach Anspruch 1 beim Betrieb einer Vorrichtung mit einer Funkenerosionselektrode (F), einem Werkstück (W), einer Logikeinrichtung (5) mit mindestens zwei Eingängen für einzugebende Parameter (δ,Inst) und mindestens einem Ausgang für ein Ausgangssignal (ε), das einer Steuerung (6) für mindestens einen Parameter zugeführt wird, wobei die Logikeinrichtung (5) zum Speichern eines Satzes von Regeln zur Verarbeitung der ihr zugeführten Parameter nach den Gesetzen der unscharfen Logik ausgebildet ist.

**Claims**

**1.** A method for controlling a spark erosion process in a spark erosion machine having a spark erosion electrode (F) and a workpiece (W), at least two parameters (δ, Inst) which are known to correspond essentially to one and the same currently prevailing state of the spark erosion process and whose variation is known to influence a currently prevailing state of the spark erosion process, being fed individually or as a combination thereof to a logic device (5) in order to generate at least one output signal (ε) of this logic device which is fed to a controller (6) for at least one of the said parameters (δ), the parameters (δ, Inst) fed to the logic device (5) being processed therein with the aid of rules stored therein according to the laws of fuzzy logic, and the controller (6) varying the parameter (δ) to be varied in such a way that the currently prevailing state of the spark erosion process is matched or at least approximated to a currently desired state of the spark erosion process,
**characterized in that**
one of the parameters fed (δ) is varied according to the rules stored in the logic device (5) when another of the parameters fed (Inst) varies.

**2.** A method according to Claim 1, characterized in that the logic device (5) is fed at least a first parameter (δ) which corresponds to a difference between an actual value $(t_{df})$ and a desired value $(t_{ds})$ of an ignition delay of a spark ignition in the region of a spark gap (9) of the spark erosion machine.

**3.** A method according to Claim 2, characterized in that the logic device (5) is fed a first parameter (δ) which corresponds to a difference, smoothed in a low-pass filter circuit (2), between the actual value $(t_d)$ and the desired value $(t_{ds})$ of the ignition delay of the spark ignition in the region of the spark gap (9) of the spark erosion machine.

4. A method according to Claim 2, characterized in that the logic device (5) is fed at least a second parameter which corresponds to an instability (Inst) in the spark erosion process.

5. A method according to Claim 4, characterized in that the second parameter corresponds to a short-term range of variation or to a short-term rate of variation in the position of the spark erosion electrode (F) with reference to the workpiece (W) or to a combination thereof.

6. A method according to Claim 4, characterized in that the second parameter corresponds to a short-term range of variation, or to a short-term rate of variation in the ignition delay, or to a combination thereof.

7. A method according to Claim 4, characterized in that the second parameter corresponds to a short-term range of variation, or to a short-term rate of variation in the output signal of the logic device or to a combination thereof.

8. A method according to Claim 1, characterized in that the parameter controlled by the output signal ($\epsilon$) of the logic device (5) corresponds to the position of the spark erosion electrode (F) with reference to the workpiece (W) in the spark erosion machine.

9. A method according to Claims 2, 4 and 8, characterized in that, with $\delta$ denoting the first parameter, Inst denoting the second parameter, and $\epsilon$ denoting the output signal of the logic device, and use being made of the following definitions for the ranges of the values of the parameters $\delta$ and Inst and of the output signal $\epsilon$ :

NB .. negative big      B .. big
NM .. negative medium      M .. medium
NS .. negative small      S .. small
ZO .. approximately zero
PB .. positive big
PM .. positive medium
PS .. positive small.

the logic device (5) processes the first and the second parameters ($\delta$, Inst) with the aid of the following rules:

If $\delta$ in NS then $\epsilon$ in NS
If $\delta$ in ZO then $\epsilon$ in ZO
If $\delta$ in PS then $\epsilon$ in PS
If $\delta$ in NM and Inst in B then $\epsilon$ in NS
If $\delta$ in NM and Inst in M then $\epsilon$ in NM
If $\delta$ in NM and Inst in S then $\epsilon$ in NM
If $\delta$ in NB and Inst in B then $\epsilon$ in NM
If $\delta$ in NB and Inst in M then $\epsilon$ in NB
If $\delta$ in NB and Inst in S then $\epsilon$ in NB
If $\delta$ in PM and Inst in B then $\epsilon$ in PS
If $\delta$ in PM and Inst in M then $\epsilon$ in PS
If $\delta$ in PM and Inst in S then $\epsilon$ in PM
If $\delta$ in PB and Inst in B then $\epsilon$ in PS
If $\delta$ in PB and Inst in M then $\epsilon$ in PM
If $\delta$ in PB and Inst in S then $\epsilon$ in PB

according to the laws of fuzzy logic, in order to generate the output signal ($\epsilon$) of the logic device (5).

10. A method according to Claim 9, characterized in that at least two adjacent ranges of values of the output signal ($\epsilon$) are situated between respective limiting values ($-128$, $NS_2$, $NS_1$, $0$, $PS_1$, $PS_2$, $+127$) of which two adjacent limiting values ($NS_2$, $NS_1$; $PS_1$, $PS_2$) can be varied in pairs with the aim of optimizing the method.

11. A method according to Claim 10, characterized in that the limiting values ($NS_2$, $NS_1$; $PS_1$, $PS_2$) are varied in pairs by an amount (DP) predetermined in each case, after stabilization of a resulting new state of the spark erosion process a corresponding rate of variation in the position of the spark erosion electrode (F) with reference to the workpiece (W) is determined, the variation of the limiting values is carried out a plurality of times, the resulting rates of variation are intercompared, and an optimized

EP 0 548 516 B1

method is continued using those optimized limiting values by means of which the largest resulting rate of variation was achieved.

**12.** A method according to Claim 11, characterized in that it is recursively repeated using the optimized limiting values last determined in each case.

**13.** A device for carrying out the method according to Claim 1, comprising a spark erosion electrode (F), a workpiece (W), a logic device (5) having at least two inputs for parameters ($\delta$, Inst) to be input and at least one output for an output signal ($\epsilon$) which is fed to a controller (6) for at least one parameter, the logic device (5) being constructed to store a set of rules for processing the parameters fed to it according to the laws of fuzzy logic.

**Revendications**

**1.** Procédé pour la commande d'un processus d'etincelage dans une machine d'étincelage comprenant une électrode d'étincelage (F) et une pièce à usiner (W), dans lequel au moins deux paramètres ($\delta$, Inst), dont on sait qu'ils correspondent essentiellement à un même état du processus d'étincelage momentanément en vigueur et que leur variation influence un état du processus d'étincelage momentanément en vigueur, sont acheminés individuellement ou en combinaison mutuelle à une installation logique (5) pour générer au moins un signal de sortie ($\epsilon$) de cette installation logique, qui est acheminé à une commande (6) pour au moins un des paramètres mentionnés ($\delta$), dans lequel le, paramètres ($\delta$, Inst) acheminés à l'installation logique (5) y sont traités en se référant à des règles qui y sont mémorisées conformément aux lois de la logique floue, et la commande (6) modifie le paramètre ($\delta$) à modifier de telle sorte que l'état du processus d'étincelage momentanément en vigueur est rendu égal ou au moins approximatif à un état du processus d'étincelage désiré momentanément,
     **caractérisé en ce que**
l'un des paramètres acheminés ($\delta$) est modifié de manière correspondante aux règles mémorisées dans l'installation logique (5) lorsqu'un autre paramètre (Inst) des paramètres acheminés se modifie.

**2.** Procédé selon la revendication 1, caractérisé en ce qu'à l'installation logique (5) est acheminé au moins un premier paramètre ($\delta$) qui correspond à une différence entre une valeur effective ($t_{df}$) et une valeur de consigne ($t_{ds}$) d'un retard d'amorçage d'étincelle dans la zone d'un trajet d'étincelle (9) de la machine d'étincelage.

**3.** Procédé selon la revendication 2, caractérisé en ce qu'à l'installation logique (5) est acheminé un premier paramètre ($\delta$) qui correspond à une différence lissée dans un circuit (2) à filtre passe-bas entre la valeur effective ($t_d$) et la valeur de consigne ($t_{ds}$) du retard d'amorçage d étincelle dans la zone d'un trajet d'étincelle (9) de la machine d'étincelage.

**4.** Procédé selon la revendication 2, caractérisé en ce qu'à l'installation logique (5) est acheminé au moins un second paramètre qui correspond à une instabilité (Inst) du processus d'étincelage.

**5.** Procédé selon la revendication 4, caractérise en ce que le second paramètre correspond à une plage de variation momentanée ou à une vitesse de variation momentanée de la position de l'électrode d'étincelage (F) par rapport à la pièce à usiner (W), ou encore à une combinaison de ces dernières.

**6.** Procédé selon la revendication 4, caractérisé en ce que le second paramètre correspond à une plage de variation momentanée ou à une vitesse de variation momentanée du retard d'amorçage, ou encore à une combinaison de ces dernières.

**7.** Procédé selon la revendication 4, caractérisé en ce que le second paramètre correspond à une plage de variation momentanée ou à une vitesse de variation momentanée du signal de sortie de l'installation logique, ou encore à une combinaison de ces dernières.

**8.** Procédé selon la revendication 1, caractérisé en ce que le paramètre commandé par le signal de sortie ($\epsilon$) de l'installation logique (5) correspond à la position de l'électrode d'étincelage (F) par rapport à la pièce à usiner (W) dans la machine d'étincelage.

13

9. Procédé selon les revendications 2, 4 et 8, caractérisé en ce que, en désignant le premier paramètre par $\delta$, le second paramètre par Inst et le signal de sortie de l'installation logique par $\epsilon$, ainsi qu'en utilisant les définitions ci-après pour les plages des valeurs des paramètres $\delta$ et Inst ainsi que du signal de sortie $\epsilon$ :

NB .. Négatif grand      B .. Grand
NM .. Négatif moyen      M .. Moyen
NS .. Négatif petit     S .. Petit
ZO .. A peu près nul
PB .. Positif grand
PM .. Positif moyen
PS .. Positif petit

l'installation logique (5) traite les premier et second paramètres ($\delta$, Inst) en se référant aux règles ci-après :

Si $\delta$ dans NS alors $\epsilon$ dans NS
Si $\delta$ dans ZO alors $\epsilon$ dans ZO
Si $\delta$ dans PS alors $\epsilon$ dans PS
Si $\delta$ dans NM et Inst dans B alors $\epsilon$ dans NS
Si $\delta$ dans NM et Inst dans M alors $\epsilon$ dans NM
Si $\delta$ dans NM et Inst dans S alors $\epsilon$ dans NM
Si $\delta$ dans NB et Inst dans B alors $\epsilon$ dans NM
Si $\delta$ dans NB et Inst dans M alors $\epsilon$ dans NB
Si $\delta$ dans NB et Inst dans S alors $\epsilon$ dans NB
Si $\delta$ dans PM et Inst dans B alors $\epsilon$ dans PS
Si $\delta$ dans PM et Inst dans M alors $\epsilon$ dans PS
Si $\delta$ dans PM et Inst dans S alors $\epsilon$ dans PM
Si $\delta$ dans PB et Inst dans B alors $\epsilon$ dans PS
Si $\delta$ dans PB et Inst dans M alors $\epsilon$ dans PM
Si $\delta$ dans PB et Inst dans S alors $\epsilon$ dans PB

conformément aux lois de la logique floue, pour générer le signal de sortie ($\epsilon$) de l'installation logique (5).

10. Procédé selon la revendication 9, caractérisé en ce qu'au moins deux plages voisines de valeurs du signal de sortie ($\epsilon$) sont situées entre des valeurs limites respectives (-128, $NS_2$, $NS_1$, 0, $PS_1$, $PS_2$, +127) parmi lesquelles deux valeurs limites voisines ($NS_2$, $NS_1$; $PS_1$, $PS_2$) peuvent être modifiées par paires aux fins d'optimisation du procédé.

11. Procédé selon la revendication 10, caractérisé en ce que les valeurs limites ($NS_2$, $NS_1$; $PS_1$, $PS_2$) sont modifiées par paires dans une mesure (DP) respectivement préétablie, en ce qu'on détermine une vitesse de variation correspondante de la position de l'électrode d'étincelage (F) par rapport à la pièce à usiner (W) après stabilisation d'un nouvel état résultant du processus d'étincelage, on effectue à plusieurs reprises la modification des valeurs limites, on compare mutuellement les vitesses de variation résultantes et on poursuit un procédé optimisé avec les valeurs limites optimisées avec lesquelles on a atteint la plus grande vitesse de variation résultante.

12. Procédé selon la revendication 11, caractérisé en ce qu'on le répète de manière récurrente avec les valeurs optimisées respectives chaque fois déterminées en dernier lieu.

13. Utilisation du procédé selon la revendication 1, dans la mise en service d'un dispositif comprenant une électrode d'étincelage (F), une pièce à usiner (W), une installation logique (5) comprenant au moins deux entrées pour des paramètres ($\delta$, Inst) à introduire et au moins une sortie pour un signal de sortie ($\epsilon$) qui est acheminé à une commande (6) pour au moins un paramètre, dans laquelle l'installation logique (5) est réalisée pour mémoriser un ensemble de règles pour le traitement des paramètres qui lui sont acheminés, conformément aux lois de la logique floue.

FIG.1

FIG. 2

FIG. 3

FIG. 4

# FiG.5

EP 0 548 516 B1